# NEUE EUROPÄISCHE PATENTSCHRIFT

(11) **EP 0 868 212 B2**
(45) Veröffentlichungstag und Bekanntmachung des Hinweises auf die Entscheidung über den Einspruch: **17.03.2004**
(45) Hinweis auf die Patenterteilung: 21.06.2000
(21) Anmeldenummer: 96944050.2
(22) Anmeldetag: 20.12.1996
(51) Int. Cl.: B01J 39/20, C08F 8/36, C08F 12/00

(54) **VERFAHREN ZUR HERSTELLUNG VON FREIFLIESSENDEN ODER TEMPORÄR FREIFLIESSENDEN STARK SAUREN KATIONENAUSTAUSCHEREN**
PROCESS FOR THE PREPARATION OF FREE-FLOWING OR TEMPORARILY FREE-FLOWING VERY ACIDIC CATION EXCHANGERS
PROCEDE DE PREPARATION D'ECHANGEURS DE CATIONS FORTEMENT ACIDES S'ECOULANT LIBREMENT OU S'ECOULANT TEMPORAIREMENT LIBREMENT

(30) Priorität: 21.12.1995 DE 19548011; 24.10.1996 DE 19644222
(43) Veröffentlichungstag der Anmeldung: 07.10.1998
(73) Patentinhaber: BAYER AG, 51368 Leverkusen (DE)
(72) Erfinder: BACHMANN, Reinhard, D-04439 Engelsdorf (DE); FEISTEL, Lothar, D-04509 Delitzsch (DE); SEIDEL, Rüdiger, D-06792 Sandersdorf (DE); SIEKIERA, Karl-Heinz, D-06766 Wolfen (DE); WEGEWITZ, Kurt, D-06749 Bitterfeld (DE)
(74) Vertreter: Zobel, Manfred, Dr.
(86) Internationale Anmeldenummer: PCT/EP1996/005785
(87) Internationale Veröffentlichungsnummer: WO 1997/023282

(56) Entgegenhaltungen:
- EP-A- 0 009 395
- EP-A- 0 223 596
- WO-A-87/04369
- WO-A-97/23517
- FR-A- 2 075 648
- GB-A- 1 078 055

## Beschreibung

Die Erfindung betrifft Verfahren zur Herstellung freifließender Endprodukte von nach der Patentanmeldung P 195 48 012.0 (WO 97/23517) hergestellten stark sauren Kationenaustauschern.

Den nach den Verfahren der in der Patentanmeldung P 195 48 012.0 (WO 97/23517) zitierten Literaturstellen mit und ohne Einsatz von inerten Quellmitteln hergestellten stark sauren Kationenaustauschem ebenso wie den nach dem erfindungsgemäßen Verfahren der erwähnten Patentanmeldung hergestellten stark sauren Kationenaustauschern haftet die nachteilige Eigenschaft an, daß die zum Ende des Herstellungsverfahrens in einem Filter entwässerten Kationenaustauscher für die technische Handhabbarkeit, Weiterverarbeitung und Anwendung nicht ausreichend freifließend sind.

Aus EP 0 009 395 ist der Zusatz von Netzmitteln und wasserlöslichen Initiatoren in der Polymerisationsstufe bekannt. Mit Hilfe der Zusätze wird die Ausbildung einer Emulsion extrem feinkörniger lonenaustauscher, Korngröße 0,01 bis 1,5 µm, bewirkt, jedoch nicht die Oberflächenladung grober Partikel im wasserfreien Zustand so beeinflußt, daß diese als Schüttgut rieselfähig werden. Die Behandlung sulfonierter Styrol-Divinylbenzol-Copolymerer mit Wasser ist Bestandteil des in EP 0 009 395 beschriebenen Herstellungsverfahrens für Kationenaustauscher. Die sohergestellten Endprodukte sind nicht freifließend.

In EP 0 223 596 A2 wird die Hydratisierung des schwefelsäure-haltigen sulfonierten Produktes im Prozeß der Herstellung eines Kationenaustauschers beschrieben.

Die Behandlung des sulfonierten Kationenaustauschers mit Wasser in dieser Prozeßstufe bewirkt jedoch nicht die freie Fließbarkeit des Endproduktes. Der einschlägigen Fachliteratur sind keine Lösungsvorschläge zur Beseitigung dieser nachteiligen Eigenschaften der Komhaufwerke von stark sauren Kationenaustauschem entnehmbar.

Der Erfindung liegt die Aufgabe zugrunde, durch geeignete stoffliche Zusätze und/oder verfahrenstechnische Maßnahmen den Herstellungsprozeß von stark sauren Kationenaustauschern so zu beeinflussen, daß die Komhaufwerke der Endprodukte freifließend werden.

Es wurde nun gefunden, daß mittels stofflicher Zusätze und verfahrenstechnischer Maßnahmen in der Polymerisationsstufe freifließende stark saure Kationenaustauscher herstellbar sind. Bei der Erfindung handelt es sich um ein Verfahren zur Herstellung von freifließenden stark sauren Kationenaustauschern, die durch Sulfonierung von Styrol-Divinylbenzol-Copolymeren mittels Schwefelsäure erhalten werden, wobei freifließende oder stark saure Kationenaustauschernach dem genannten Verfahren herstellbar sind:
- durch Zusatz in der Polymerisationsstufe von
- Netzmitteln in Mengen bis 0,25 g/l wäßriger Phase oder
- wasserlöslicher Initiatoren in Mengen von 0,05 bis 20 g/l wäßriger Phase

20 Minuten bis 120 Minuten nach dem Erreichen des Gelpunktes zum Copolymerisationssystem zur Herstellung dauerhaft freifließender Kationenaustauscher,

Im einzelnen handelt es sich um nachfolgende erfindungsgemäße Verfahrensweisen, die zu einem an sich bekannten Stoff mit neuen Eigenschaften führen:
1. Freifließende Endprodukte werden erhalten, wenn man die Herstellung des Ausgangsproduktes für den stark sauren Kationenaustauscher, das Styrol-Divinylbenzol-Kopolymerisat dahingehend beeinflußt, daß ein erhöhter Anteil an Emulsionspolymerisat entsteht. Dies wird erfindungsgemäß dadurch bewirkt, daß dem Ansatz des Copolymerisationssystems 20 bis 120 min nach Erreichen des Gelpunktes
   - Netzmittel z. B. Natriumsalze der Alkansulfonsäuren der Kettenlänge C₁₂-C₁₈ in einer Konzentration bis zu 0,25 g/l Wasser oder
   - 0,05 bis 0,20 g/l Wasser eines wasserlöslichen Initiators wie z. B. Kaliumperoxidisulfat (K₂S₂O₈)

### zugesetzt werden.

Nach den Ausführungsbeispielen 1 und 2 hergestellte stark saure Kationenaustauscher sind dauerhaft freifließend.

Zur Bewertung der freien Fließbarkeit wurde die Auslaufcharakteristik aus einem definierten Trichter ermittelt. Die Abmessungen des Trichters sind dem anliegenden Zeichnungsblatt zu entnehmen.

Das Material des Trichters mit je gleichen Innenabmessungen bestand
a) aus Teflon® und
b) aus C2A-Stahl

Das Probegut wird locker In den Trichter eingefüllt. Die Auslauföffnung des Trichters ist verschlossen.
Zur Ausführung des Rieseltestes wird der Trichterauslauf erschütterungsfrei geöffnet.

Nach folgenden Kriterien wird die Fließbarkeit der stark sauren Kationenaustauscher beurteilt:
1. Gesamtes Material fließt von allein aus dem Trichter
2. Nur der untere Teil des Trichters fließt spontan aus, durch leichtes Klopfen am Trichter der komplette Inhalt
3. Untere Teil der Trichters fließt spontan aus; auch mit Intensivem Klopfen bleibt das Probegut im oberen Teil des Trichters
4. Untere Teil des Trichters fließt erst nach intensivem Klopfen aus dem Trichter
5. Auch mit Klopfen fließt keinerlei Material aus dem Trichter.

Endprodukte mit der Bewertung 1 werden als "frei fließend" eingestuft. Da das Trichtermaterial erheblich das Auslaufverhalten der Endprodukte beeinflußt, sind o.a. Bewertungen an beiden Trichtern vorzunehmen.

Unter Anwendung der erfindungsgemäßen Verfahren werden die den Endprodukten anhaftenden Nachteile überwunden und folgende vorteilhafte Eigenschaften und Wirkungen erzielt.
- Die Produkte sind freifließend
- Durch die freie Fließbarkeit treten keine technischen Probleme bei der Verpackung im Herstellerbetrieb auf.
- Keine Dosierprobleme beim Kunden in Kleingebinde.
- Bei der Heißwaschung/Trennung/Trocknungsvariante erfolgt eine zusätzliche Reinigung des Produktes.
- Die stofflichen Zusätze zum Copolymerisationssystem haben den Vorteil, daß eine Nachbehandlung der Endprodukte nach der Filtration entfällt.

### Beispiel 1

In einer Polymerisationsapparatur bestehend aus 2 l Planschliffbecher, ausgestattet mit Rührer, Kontaktthermometer, Gaseinleitungsrohr und Kühler sowie Infrarotheizung wird wie folgt polymerisiert:

900 ml Brunnenwasser werden vorgelegt und 7,3 g MgSO₄ wasserfrei und 20 g NaCl gelöst. Dann werden 25 ml Wotamollösung (1 g/l), 11 ml Sapallösung (1 g/l) hinzugefügt und auf 40°C erhitzt und 5,8 g Ätznatron gelöst in 100 ml Wasserzugegeben und auf 71 °C erhitzt.

Bei dieser Temperatur werden unter Stickstoffbeschleierung (5 bis 10 1/h) 500 g der polymerisierbaren Phase zugegeben. Diese besteht aus 442,5 g Styrol, 57,7 g Divinylbenzol (65,14 %ig) und 0,45 g Perkadox® als Initiator. Die organische Phase wird durch Rühren auf die gewünschte Korngröße verteilt und bei dieser Temperatur gehalten. Die organischen Substanzen polymerisieren und gehen in den gelartigen Zustand über. Ist dies erfolgt, wird die Temperatur 3 h bei 69°C gehalten. 1 h nach dem Gelpunkt werden in die Suspension 250 mg des Netzmittels Mersolat® (Handelsname für Na-Salze von Alkansulfonsäuren der Kettenlänge C₁₂-C₁₈) eingetragen.

Nach der Polymerisationsphase wird auf 95 °C geheizt und 4 h bei dieser Temperatur ausgehärtet. Der gesamte Ansatz wird auf Zimmertemperatur abgekühlt, anschließend auf ein 0,25 mm-Sieb gegeben, von der wäßrigen Phase getrennt und das Polymerisat mit Brunnenwasser neutral gewaschen und abgesaugt. Das Polymerisat wird 2 h bei 105 °C getrocknet und gesiebt. 50 g der Komfraktion 0,25 - 0,8 mm werden in üblicher Weise mit
Dichlorethan gequollen und mit 200 ml konz. Schwefelsäure 6 h bei 105 °C sulfoniert. Nach Abkühlung auf Raumtemperatur wird das Produkt von der Schwefelsäure getrennt und stufenweise mit 60, 40, 20 %iger Schwefelsäure, 20 %iger, 10 %iger NaCl-Lösung und Wasserausgewaschen und mit verdünnter Natronlauge neutral gestellt.
Der erhaltene stark saure Kationenaustauscher ist freifließend.

### Beispiel 2

In der gleichen Polymerisationsapparatur, wie in Beispiel 1 beschrieben, wird eine analoge wäßrige Phase bereitet und auf 71 °C erhitzt. Die organische Phase bestehend aus den gleichen Komponenten mit den gleichen Mischungsverhältnissen wird hinzugegeben und polymerisiert. 2 Stunden nach dem Gelpunkt werden 200 mg Kaliumperoxidisulfat zugegeben und die Polymerisation wie in Beispiel 1 zu Ende gefahren. Danach wird das Polymerisat ebenfalls wie in Beispiel 1 abgetrennt, aufgearbeitet und unter gleichen Bedingungen sulfoniert.
Das Produkt ist freifließend.

## Patentansprüche

1. Verfahren zur Herstellung von freifließenden stark sauren Kationenaustauschern, die durch Sulfonierung von Styrol-Divinylbenzol-Copolymeren mittels Schwefelsäure erhalten werden, **dadurch gekennzeichnet, dass** freifließende stark saure Kationenaustauscher nach dem genannten Verfahren herstellbar sind:
durch Zusatz in der Polymerisationsstufe von
- Netzmitteln in Mengen bis 0,25 g/l wässriger Phase oder
- wasserlöslicher Initiatoren in Mengen von 0,05 bis 20 g/l wässriger Phase
20 Minuten bis 120 Minuten nach dem Erreichen des Gelpunktes zum Copolymerisationssystem zur Herstellung dauerhaft freifließender Kationenaustauscher,

2. Verfahren zur Herstellung von freifließenden stark sauren Kationenaustauschem nach Anspruch 1, Pkt. 1, **dadurch gekennzeichnet, daß** als Netzmittel Natriumsalze von Alkansulfonsäuren mit einer Kettenlänge C₁₂-C₁₈ oder als wasserlöslicher Initiator Kaliumperoxidisulfat (K₂S₂O₈) dem Kopotymerisationssystem zugesetzt werden.

## Claims

1. Process for the preparation of free-flowing strongly acidic cation exchangers which are obtained by sulphonation of styrene/divinylbenzene copolymers by means of sulphuric acid, **characterized in that** free-flowing strongly acidic cation exchangers can be prepared by the stated process:
by addition in a polymerization stage of
- wetting agents in amounts of 0.25 g/l of aqueous phase or
- water-soluble initiators in amounts of 0.05 to 20 g/l of aqueous phase
to the copolymerization system 20 minutes to 120 minutes after reaching the gel point, for the preparation of permanently free-flowing cation exchangers.

2. Process for the preparation of free-flowing strongly acidic cation exchangers according to Claim 1, point 1, **characterized in that** sodium salts of alkanesulphonic acids having a chain length of C₁₂-C₁₈, as wetting agents, or potassium peroxydisulphate (K₂S₂O₈), as water-soluble initiator, are added to the copolymerization system.

## Revendications

1. Procédé pour la préparation d'échangeurs de cations fortement acides s'écoulant librement, lesquels sont obtenus par sulfonation de copolymères de styrène-divinylbenzène à l'aide d'acide sulfurique, **caractérisé en ce que** les échangeurs de cations fortement acides s'écoulant librement peuvent être préparés selon le procédé cité :
par addition dans l'étape de polymérisation
- d'agents mouillants en quantités allant jusqu'à 0,25 g/l de phase aqueuse ou
- d'initiateurs solubles dans l'eau en quantités de 0,05 à 20 g/l de phase aqueuse
pendant de 20 minutes à 120 minutes après avoir atteint le point de gélification du système de copolymérisation pour la préparation d'échangeurs de cations s'écoulant librement de manière permanente.

2. Procédé pour la préparation d'échangeurs de cations fortement acides s'écoulant librement selon la revendication 1, **caractérisé en ce que** l'on ajoute au système de copolymérisation comme agent mouillant des sels de sodium d'acides alcanesulfoniques d'une longueur de chaîne C₁₂-C₁₈ ou comme initiateur soluble dans l'eau du peroxydisulfate de potassium (K₂S₂O₈).
